# EUROPÄISCHE PATENTSCHRIFT

(11) **EP 3 526 086 B1**
(45) Veröffentlichungstag und Bekanntmachung des Hinweises auf die Patenterteilung: **12.08.2020**
(21) Anmeldenummer: 17769076.5
(22) Anmeldetag: 20.09.2017
(51) Int. Cl.: B60T 8/36, F16K 31/06

(54) **MAGNETVENTIL UND HYDRAULISCHES BREMSSYSTEM FÜR EIN FAHRZEUG**
SOLENOID VALVE AND HYDRAULIC BRAKING SYSTEM FOR A VEHICLE
ÉLECTROVANNE ET SYSTÈME DE FREINAGE HYDRAULIQUE POUR VÉHICULE

(30) Priorität: 13.10.2016 DE 102016219939
(43) Veröffentlichungstag der Anmeldung: 21.08.2019
(73) Patentinhaber: Robert Bosch GmbH, 70442 Stuttgart (DE)
(72) Erfinder: STAHR, Wolf, 74232 Abstatt (DE); AMBROSI, Massimiliano, 74232 Abstatt (DE); EISENLAUER, Michael, 71563 Affalterbach (DE); KURZ, Edgar, 74081 Heilbronn-Horkheim (DE); KRATZER, Dietmar, 71732 Tamm (DE)
(86) Internationale Anmeldenummer: PCT/EP2017/073721
(87) Internationale Veröffentlichungsnummer: WO 2018/069008

(56) Entgegenhaltungen:
- WO-A1-2014/158993
- WO-A1-2016/034347
- DE-A1-102009 055 118
- DE-A1-102011 006 218
- US-B2- 6 669 165

## Beschreibung

Die Erfindung geht aus von einem Magnetventil für ein hydraulisches Bremssystem nach der Gattung des unabhängigen Patentanspruchs 1. Gegenstand der vorliegenden Erfindung ist auch ein hydraulischen Bremssystem für ein Fahrzeug mit einem solchen Magnetventil.

Aus dem Stand der Technik sind hydraulische Bremssysteme für Fahrzeuge mit einem Hauptbremszylinder, einer Hydraulikeinheit und mehreren Radbremsen bekannt, die verschiedene Sicherheitssysteme, wie beispielsweise ein Antiblockiersystem (ABS), elektronisches Stabilitätsprogramm (ESP) usw. umfassen, und verschiedene Sicherheitsfunktionen, wie beispielsweise eine Antiblockierfunktion, eine Antriebsschlupfregelung (ASR) usw. ausführen können. Über die Hydraulikeinheit können Steuer- und/oder Regelvorgänge im Antiblockiersystem (ABS) oder im Antriebsschlupfregelsystem (ASR-System) oder im elektronischen Stabilitätsprogrammsystem (ESP-System) für den Druckaufbau bzw. Druckabbau in den korrespondierenden Radbremsen durchgeführt werden. Zur Durchführung der Steuer- und/oder Regelvorgänge umfasst die Hydraulikeinheit Magnetventile, welche aufgrund der gegensätzlich wirkenden Kräfte "Magnetkraft", "Federkraft" und "Hydraulikkraft" meist in eindeutigen Positionen gehalten werden. Dementsprechend gibt es die Ventilarten "stromlos offen" und "stromlos geschlossen". Diese Magnetventile umfassen jeweils eine Magnetbaugruppe und eine Ventilpatrone, welche einen Polkern, eine mit dem Polkern verbundene Führungshülse, einen innerhalb der Führungshülse gegen die Kraft einer Rückstellfeder zwischen einer Geschlossenposition und einer Offenposition axial beweglich geführten Anker mit einem Stößel und einem Schließelement und einen mit der Führungshülse verbundene Ventilhülse mit einem Ventilsitz umfasst. Durch die Bestromung der Magnetbaugruppe wird eine Magnetkraft erzeugt, welche den Anker mit dem Stößel und dem Schließelement bei einem unbestromt offenen Magnetventil von der Offenstellung in die Geschlossenstellung bewegt bis das Schließelement auf den korrespondierenden Ventilsitz trifft und diesen abdichtet. Im unbestromten Zustand bewegt die Rückstellfeder den Anker mit dem Stößel und dem Schließelement und das Schließelement hebt vom Ventilsitz ab und gibt diesen frei. Bei einem unbestromt geschlossenen Magnetventil wird der Anker mit dem Stößel und dem Schließelement durch die Bestromung der Magnetbaugruppe von der Geschlossenstellung in die Offenstellung bewegt und das Schließelement hebt aus dem Ventilsitz ab und gibt diesen frei. Wird der Strom abgeschaltet, dann bewegt die Rückstellfeder den Magnetanker mit dem Schließelement in Richtung Ventilsitz bis das Schließelement auf den Ventilsitz trifft und diesen abdichtet. Mit dieser Bestromung geht Energieverbrauch einher, der unerwünscht ist. Darüber hinaus ist die Funktionssicherheit bzw. Funktionsverfügbarkeit nicht im erwünschten Umfang gegeben, wenn die Funktion nur über aktive Bestromung erreicht wird.

In der Offenlegungsschrift DE 10 2007 051 557 A1 wird beispielsweise ein stromlos geschlossenes Magnetventil für eine schlupfgeregelte, hydraulische Fahrzeugbremsanlage beschrieben. Das Magnetventil umfasst einen auch als Ventilpatrone bezeichneten hydraulischen Teil, welcher teilweise in einer abgestuften Bohrung eines Ventilblocks angeordnet ist, und einen elektrischen Teil, welcher im Wesentlichen aus einer Magnetbaugruppe gebildet ist, welche auf den aus dem Ventilblock ragenden Teil der Ventilpatrone aufgesteckt ist. Die Magnetbaugruppe umfasst einen Spulenkörper mit einer elektrischen Wicklung, einen magnetflussleitenden Spulenmantel und eine magnetflussleitende Ringscheibe. Der hydraulische Teil weist eine Führungshülse auf, welche an ihrem dem elektrischen Teil zugewandten Ende mit einem eingepressten und fluiddicht verschweißten Polkern verschlossen ist. In der Führungshülse ist ein längsverschiebbarer Anker aufgenommen, welcher mit einer Rückstellfeder am Polkern abgestützt ist. Polkernabgewandt weist der Anker einen in einer Vertiefung angeordneten kugelförmigen Schließkörper auf. Am polkernabgewandten Ende ist in die Führungshülse eine topfförmige Ventilhülse mit einem zylindrischen Mantel und einem Boden eingepresst. Die Ventilhülse weist am Boden einen Durchgang sowie einen hohlkegelförmigen Ventilsitz auf, welcher mit dem Schließkörper ein Sitzventil ausbildet. Mit dem Sitzventil ist eine Fluidverbindung zwischen dem Durchgang am Boden der Ventilhülse und mindestens einem Durchgang im Mantel der Ventilhülse schaltbar ausgeführt. Zudem ist außen am Mantel der Ventilhülse ein Radialfilter angeordnet, um Schmutzpartikel aus der Fluidströmung zu filtern. Die Führungshülse kann mittels einer Befestigungsbuchse in der Stufenbohrung des Ventilblocks verstemmt werden.

Aus der EP 0 073 886 B1 ist ein hydraulisches Steuergerät mit einem axial in mehrere Schaltstellungen verschiebbaren und mittels einer Rückstellfeder selbsttätig in eine seiner Schaltstellungen zurückgehenden Steuerschieber bekannt, welcher außerhalb dieser Schaltstellung durch eine in Raststellen eingreifendes federbelastete Raste festlegbar ist, welche ferner durch ein als Kolben in einer Gehäusebohrung geführtes und über einen angrenzenden Ringraum mit Druckflüssigkeit beaufschlagbares Teil hydraulisch betätigbar ist. Der Ringraum steht über ein Vorsteuerventil mit der zum Verbraucher führenden Pumpendruckleitung in Verbindung, welche bei Abschaltung des bzw. der Verbraucher druckentlastet ist. Hierbei ist der hydraulische Stellweg der Raste gegenüber ihrem gegen Federkraft möglichen Stellweg begrenzt und die Raststellen am Steuerschieber zum Ein- bzw. Hintergreifen der Raste sind radial so bemessen, dass ein hydraulischen Auslösen der Raste unabhängig von dem gegen Federkraft möglichen Stellweg nur an den dafür vorgesehenen Raststellungen möglich ist.

Weiterhin ist aus dem Stand der Technik die WO 2016 034 347 A1 bekannt. Hierin wird beschrieben ein Ventilanker für ein Magnetventil, an dessen einem Ende eine Vertiefung angeordnet ist, welche ein mit einem Ventilsitz zusammenwirkendes Schließelement mit einem Schließkörper aufnimmt, dadurch gekennzeichnet, dass zwischen dem Schließkörper und der Vertiefung ein elastisches Dämpfungselement angeordnet ist, welches einen beim Auftreffen des Schließkörpers auf dem Ventilsitz entstehenden Impuls dämpft.

### Offenbarung der Erfindung

Das Magnetventil für ein hydraulisches Bremssystem mit den Merkmalen des unabhängigen Patentanspruchs 1 hat den Vorteil, dass in einem Magnetventil mit einem stromlosen ersten Betriebszustand ein weiterer stromloser zweiter Betriebszustand umgesetzt werden kann. Das bedeutet, dass Ausführungsformen der vorliegenden Erfindung ein bistabiles Magnetventil zur Verfügung stellen, welches durch Anlegen eines Umschaltsignals zwischen den beiden Betriebszuständen umgeschaltet werden kann, wobei das Magnetventil dauerhaft bis zum nächsten Umschaltsignal im jeweiligen Betriebszustand verbleibt. Hierbei kann der erste Betriebszustand einer Geschlossenstellung des Magnetventils und der zweite Betriebszustand kann einer Offenstellung des Magnetventils entsprechen. Der Wechsel zwischen den beiden Betriebszuständen kann beispielsweise durch kurze Bestromung des aktiven Stellglieds der Magnetbaugruppe bzw. durch Anlegen eines Umschaltsignals bzw. Stromimpulses an die Magnetbaugruppe durchgeführt werden. Mit einer solchen kurzen Bestromung kann der Energieverbrauch im Vergleich mit einem herkömmlichen Magnetventil mit zwei Betriebszuständen in vorteilhafter Weise reduziert werden, welches nur einen stromlosen ersten Betriebszustand aufweist und zur Umsetzung des bestromten zweiten Betriebszustandes für die Dauer des zweiten Betriebszustandes bestromt werden muss. Darüber hinaus ist die Funktionssicherheit bzw. Funktionsverfügbarkeit im Gegensatz zu Ausführungsformen der vorliegenden Erfindung nicht im erwünschten Umfang gegeben, wenn die Funktion nur über aktive Bestromung erreicht werden kann.

Die vorliegende Erfindung stellt ein Magnetventil für ein hydraulisches Bremssystem, mit einer Magnetbaugruppe, einem Polkern, einer mit dem Polkern verbundenen Führungshülse, einem innerhalb der Führungshülse axial beweglich geführten Ventilanker, welcher von einer durch die Magnetbaugruppe erzeugten Magnetkraft gegen die Kraft einer Rückstellfeder oder durch die Kraft der Rückstellfeder antreibbar ist und einen Stößel mit einem Schließelement axial bewegt, und einem mit der Führungshülse verbundenen Ventilkörper mit einem Ventilsitz zur Verfügung, welcher zwischen mindestens einer ersten Strömungsöffnung und mindestens einer zweiten Strömungsöffnung angeordnet ist. Der Stößel ist fest mit dem Ventilanker verbunden. Hierbei weist der Ventilkörper einen Aufnahmebereich auf, welcher eine Führungsbaugruppe zumindest teilweise aufnimmt, wobei der Ventilanker in mindestens einer Durchgangsöffnung der Führungsbaugruppe axial geführt ist. Zwischen der Führungsbaugruppe und dem Ventilanker ist eine mechanische Rastvorrichtung ausgebildet, welche geeignet ist, den Ventilanker in einer stromlosen Geschlossenstellung freizugeben, so dass die Rückstellfeder den Ventilanker antreibt und das Schließelement zur Ausführung einer Dichtfunktion dichtend in den Ventilsitz drückt, und den Ventilanker in einer stromlosen Offenstellung gegen die Kraft der Rückstellfeder in einer axialen Raststellung so festzulegen, dass das Schließelement vom Ventilsitz abgehoben ist. In der stromlosen Geschlossenstellung ist die Fluidströmung zwischen der mindestens einen ersten Strömungsöffnung und der mindestens einen zweiten Strömungsöffnung unterbrochen und in der stromlosen Offenstellung wird die Fluidströmung zwischen der mindestens einen ersten Strömungsöffnung und der mindestens einen zweiten Strömungsöffnung ermöglicht.

Das erfindungsgemäße Magnetventil weist in vorteilhafter Weise eine sehr geringe Leckage in der Geschlossenstellung und einen geringen Energieverbrauch in der Offenstellung auf.

Das hydraulisches Bremssystem für ein Fahrzeug mit den Merkmalen des abhängigen Patentanspruchs 11 hat den Vorteil, dass mit geringem Zusatzaufwand an einer meist vorhandenen Hydraulikeinheit mit ESP-Funktionalität eine Zusatzfunktion realisiert werden kann, welche einen aktuellen Bremsdruck in der korrespondierenden Radbremse elektro-hydraulisch einschließen und bei geringem Energiebedarf über einen längeren Zeitraum halten kann. Das bedeutet, dass die vorhandene Druckversorgung, die Rohrleitungen von der Hydraulikeinheit bis zu den Radbremsen sowie Sensor- und Kommunikationssignale nicht nur für die ESP-Funktion und/oder ABS-Funktion und/oder ASR-Funktion sondern auch für eine elektro-hydraulische Druckhaltefunktion in den Radbremsen verwendet werden können. Dadurch können in vorteilhafter Weise Kosten, Bauraum, Gewicht und Verkabelung mit dem positiven Effekt eingespart werden, dass sich die Komplexität des Bremssystems reduziert.

Durch die in den abhängigen Ansprüchen aufgeführten Maßnahmen und Weiterbildungen sind vorteilhafte Verbesserungen des im unabhängigen Patentanspruch 1 angegebenen Magnetventils für ein hydraulisches Bremssystem möglich.

Besonders vorteilhaft ist, dass die mechanische Rastvorrichtung als Drehnockenmechanismus ausgeführt ist, welcher eine Umfangskraftkomponente nutzt, um eine Drehstellung zwischen dem Ventilanker mit Schließelement und der Führungsbaugruppe zu verändern und den Ventilanker mit Schließelement axial in die Raststellung hinein und wieder heraus zu bewegen, so dass der Ventilanker mit dem Schließelement durch Anlegen eines Umschaltsignals bzw. Stromimpulses an die Magnetbaugruppe einfach zwischen den beiden stromlosen Stellungen wechseln kann. Ausgehend von der stromlosen Geschlossenstellung kann der Ventilanker mit dem Schließelement durch Anlegen eines Umschaltsignals von der stromlosen Geschlossenstellung in die stromlose Offenstellung wechseln. Bei Anlegen eines nachfolgenden Umschaltsignals wechselt der Ventilanker mit dem Schließelement zurück von der stromlosen Offenstellung in die stromlose Geschlossenstellung. Ausgehend von der stromlosen Offenstellung kann der Ventilanker mit dem Schließelement durch Anlegen eines Umschaltsignals von der stromlosen Offenstellung in die stromlose Geschlossenstellung wechseln. Bei Anlegen eines nachfolgenden Umschaltsignals wechselt der Ventilanker mit dem Schließelement zurück von der stromlosen Geschlossenstellung in die stromlose Offenstellung. In Abhängigkeit der zu überwindenden Reibung kann sich bei der Axialbewegung des Ventilankers die Führungsbaugruppe relativ zum Ventilanker drehen und/oder der Ventilanker kann sich relativ zur angeordneten Führungsbaugruppe drehen. Um gezielt nur die Bewegung einer Baugruppe zuzulassen kann die Führungsbaugruppe drehfest im Ventilkörper befestigt werden oder der Ventilanker kann über einen Formschluss mit der Führungshülse oder dem Polkern mit einem Verdrehschutz ausgeführt werden.

In vorteilhafter Ausgestaltung des Magnetventils kann die Führungsbaugruppe drehbeweglich oder drehfest im Aufnahmebereich des Ventilkörpers gelagert werden. So kann die Führungsbaugruppe beispielsweise zwischen einer Auflage und einem Haltering oder in einem Hinterschnitt geführt werden, welche eine axiale Position der Führungsbaugruppe definieren können.

In weiterer vorteilhafter Ausgestaltung des Magnetventils kann die Führungsbaugruppe einen Steuerkäfig, welcher eine erste Durchgangsöffnung und eine erste Führungsgeometrie aufweisen kann, und einen Steuerring umfassen, welcher eine zweite Durchgangsöffnung und eine zweite Führungsgeometrie aufweisen kann. Der Steuerkäfig und der Steuerring können beispielsweise jeweils als Einzelteil ausgeführt werden. Diese Einzelteile können beispielsweise als Kunststoffteile in einem Spritzgussverfahren hergestellt werden. Alternativ können die Kunststoffteile durch Pulver-Injection-Moulding (PIM) oder Ceramic-Injection-Moulding (CIM) oder Metal-Injection-Moulding (MIM) usw. oder durch 3D-Drucken hergestellt werden. Zudem kann der Steuerring als Blechteil in einem Stanzbiegeprozess hergestellt werden. Durch die mehrteilige Ausführung der Führungsbaugruppe als Kunststoffteile können die komplexen Führungsgeometrien einfach und kostengünstig als Massenteile hergestellt und anschließend miteinander gefügt werden. Der Steuerkäfig und der Steuerring können drehfest miteinander verbunden werden, wobei der Steuerring in den Steuerkäfig eingeführt und mindestens eine am Steuerring ausgebildete Positionierungsnase in eine korrespondierende am Steuerkäfig ausgebildete Positionierungsaussparung gefügt werden kann. Alternativ kann die Führungsbaugruppe mit Steuerkäfig und Steuerring einteilig, beispielsweise als Zweikomponentenkunststoffspritzgussteil ausgeführt werden.

In weiterer vorteilhafter Ausgestaltung des Magnetventils kann der Ventilanker einen gestuften zylindrischen Grundkörper mit zwei verschiedenen Außendurchmessern aufweisen, wobei ein in der mindestens einen Durchgangsöffnung der Führungsbaugruppe geführter Abschnitt des Grundkörpers des Ventilankers eine dritte Führungsgeometrie aufweisen kann, welche bei einer axialen Bewegung des Ventilankers in Richtung Polkern mit der ersten Führungsgeometrie des Steuerkäfigs und bei einer axialen Bewegung des Ventilankers in Richtung Ventilsitz mit der zweiten Führungsgeometrie des Steuerrings zusammenwirken und eine Drehbewegung des Ventilankers und/oder der Führungsbaugruppe um eine gemeinsame Längsachse erzeugen kann. Der Ventilanker kann durch einen außerhalb der Führungsbaugruppe angeordneten Abschnitt des Grundkörpers an einer Innenwand der Führungshülse drehbeweglich oder mit einem Verdrehschutz radial geführt werden. Aufgrund der Anforderung der magnetischen Leitfähigkeit wird der Ventilanker aus einem magnetisch leitfähigen Werkstoff beispielsweise im Kaltschlagverfahren oder spanend hergestellt. Der Polkern ist ebenfalls aus einem magnetisch leitfähigen Werkstoff hergestellt. Der Stößel kann beispielsweise als Kunststoffbauteil in einem Spritzgussverfahren hergestellt werden. Alternativ kann der Stößel durch Pulver-Injection-Moulding (PIM) oder Ceramic-Injection-Moulding (CIM) oder Metal-Injection-Moulding (MIM) usw. oder durch 3D-Drucken hergestellt werden. Zudem kann der Stößel an seiner Spitze einteilig als Schließelement für den Ventilsitz ausgeführt werden. Alternativ kann der Stößel mehrteilig ausgeführt werden und beispielsweise ein zusätzliches Dichtelement, wie beispielsweise eine O-Ring-Dichtung, aufweisen, welches im Bereich des Schließelements angeordnet ist und die Dichtwirkung in der Geschlossenstellung verbessert. Der Stößel kann beispielsweise in eine entsprechende Aufnahme im Grundkörper des Ventilankers eingepresst werden.

In weiterer vorteilhafter Ausgestaltung des Magnetventils kann die erste Führungsgeometrie eine erste umlaufende Kulissenführung mit an einer Wandung der ersten Durchgangsöffnung in gleichmäßiger Winkelteilung ausgebildeten ersten Aussparungen aufweisen, welche durch erste Trennstege voneinander getrennt sind, an welchen jeweils eine einseitige Anschrägung ausgebildet werden kann. Die zweite Führungsgeometrie kann eine zweite umlaufende Kulissenführung mit an einer Wandung der zweiten Durchgangsöffnung in gleichmäßiger Winkelteilung ausgebildeten zweiten Aussparungen mit unterschiedlichen axialen Tiefen aufweisen, welche durch zweite Trennstege voneinander getrennt sind, an welchen jeweils eine einseitige Abschrägung ausgebildet werden kann. Hierbei können die ersten Trennstege versetzt zu den zweiten Trennstegen angeordnet werden, wobei die dritte Führungsgeometrie mindestens ein radial abstehendes Positionierungselement aufweisen kann. Bei einer abgerundeten Ausführung des mindestens einen Positionierungselements kann das Einleiten einer Drehbewegung der Führungsbaugruppe und/oder des Ventilankers in vorteilhafter Weise über einen tangentialen Kontakt des abgerundeten Positionierungselements auf einer Schrägfläche erfolgen. Dadurch kann bei der im Fahrzeug zu erwartenden hohen Anzahl von Schaltvorgängen im Unterschied zu anderen Lösungen, welche für die Funktion des rotatorischen Weiterschaltens axial vorgespannte spitze Konturen unter Kontakt gegeneinander verdrehen, ein Verschleißabtrag an den funktionswichtigen Teilen vermieden oder zumindest reduziert werden. Zudem kann der Umschaltvorgang im Vergleich zu anderen Lösungen mit einem relativ kleinen axialen Betätigungshub umgesetzt werden, was sich im Magnetventil über den reduzierten Luftspalt positiv auf die erreichbare Axialkraft auswirken kann. Alternativ kann das mindestens eine Positionierungselement einen eckigen, vorzugsweise dreieckigen Querschnitt aufweisen.

In weiterer vorteilhafter Ausgestaltung des Magnetventils kann der Ventilanker bei einer durch Magnetkraft der Magnetbaugruppe bewirkten Axialbewegung in Richtung Polkern den Stößel und sein Schließelement mitnehmen, wobei das mindestens eine Positionierungselement ausgehend von einer Position in einer zweiten Aussparung auf eine korrespondierende Anschrägung des Steuerkäfigs treffen kann, wodurch eine Umfangskraft auf die Führungsbaugruppe und/oder den Ventilanker wirken und die Führungsbaugruppe und/oder den Ventilanker um eine korrespondierende Längsachse drehen kann bis das mindestens eine Positionierungselement am Ende der Anschrägung in eine korrespondierende erste Aussparung gleiten kann. Hierbei kann bei der durch die Federkraft der Rückstellfeder bewirkten Axialbewegung des Ventilankers in Richtung Ventilsitz das mindestens eine Positionierungselement aus der ersten Aussparung auf eine korrespondierende Abschrägung des Steuerrings treffen, wodurch eine Umfangskraft auf die Führungsbaugruppe und/oder den Ventilanker wirken und die Führungsbaugruppe und/oder den Ventilanker um die korrespondierende Längsachse weiterdrehen kann bis das mindestens eine Positionierungselement am Ende der Abschrägung in eine korrespondierende zweite Aussparung gleiten kann. Des Weiteren kann in der stromlosen Offenstellung das mindestens eine Positionierungselement an einem Anschlag in einer flachen zweiten Ausformung anliegen und in der stromlosen Geschlossenstellung in einer tiefen zweiten Ausformung bis zum Anschlag des Schließelements im Ventilsitz geführt werden. Der maximale Arbeitshub des Ventilankers kann beispielsweise durch einen Luftspalt zwischen Polkern und Ventilanker bzw. durch den Anschlag des Ventilankers am Polkern vorgegeben werden.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Schnittdarstellung eines Ausführungsbeispiels eines erfindungsgemäßen Magnetventils in seiner stromlosen Geschlossenstellung.
Fig. 2 zeigt eine schematische perspektivische Darstellung eines Ausführungsbeispiels einer Führungsbaugruppe für das Magnetventil aus Fig. 1 von unten.
Fig. 3 zeigt eine schematische perspektivische Teilschnittdarstellung der mit einem Ventilkörper des Magnetventils aus Fig. 1 gefügten Führungsbaugruppe aus Fig. 2.
Fig. 4 zeigt eine schematische Detailschnittdarstellung eines Ausführungsbeispiels eines Ventilankers für das Magnetventil aus Fig. 1.
Fig. 5 bis 10 zeigen jeweils eine schematische perspektivische Darstellung eines Ausführungsbeispiels einer mechanischen Rastvorrichtung für das Magnetventil aus Fig. 1 in verschiedenen Stellungen.
Fig. 11 zeigt eine schematische perspektivische Schnittdarstellung des erfindungsgemäßen Magnetventils aus Fig. 1 in seiner stromlosen Offenstellung.
Fig. 12 zeigt einen schematischen Hydraulikschaltplan eines Ausführungsbeispiels eines erfindungsgemäßen hydraulischen Bremssystems für ein Fahrzeug.

### Ausführungsformen der Erfindung

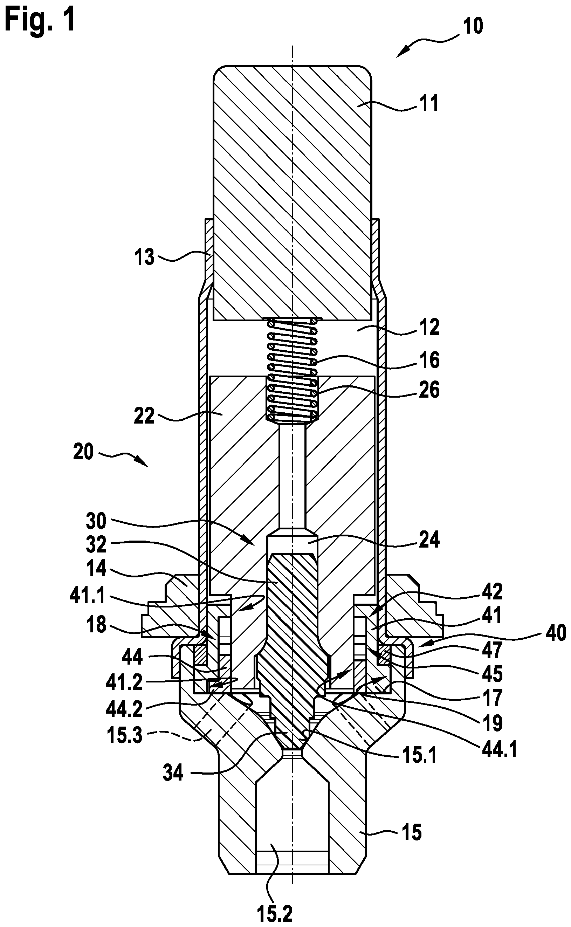

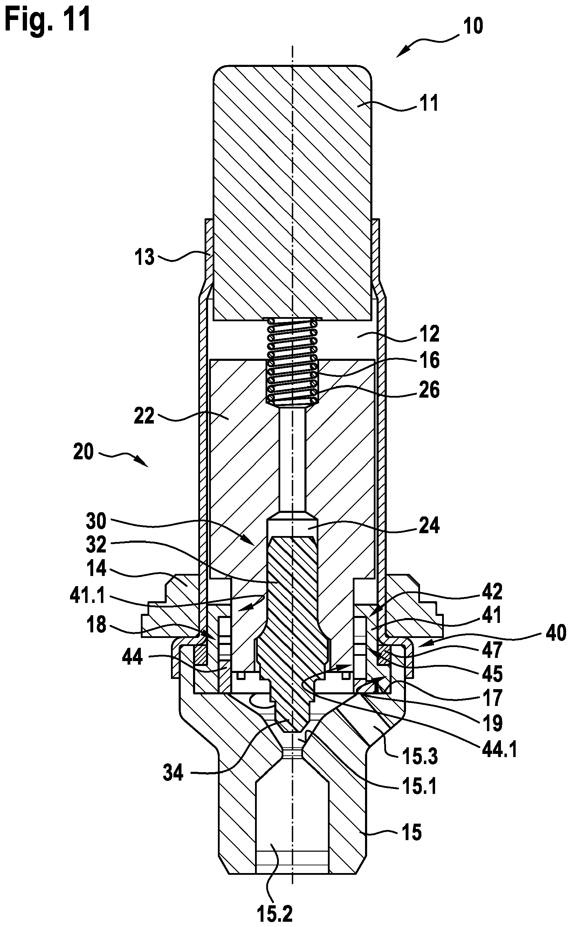

Wie aus Fig. 1 bis 11 ersichtlich ist, umfasst das dargestellte Ausführungsbeispiel eines erfindungsgemäßen Magnetventils 10 für ein hydraulisches Bremssystem 1 eine nicht näher dargestellte Magnetbaugruppe, einen Polkern 11, eine mit dem Polkern 11 verbundene Führungshülse 13, einen innerhalb der Führungshülse 13 axial beweglich geführten Ventilanker 20, welcher von einer durch die Magnetbaugruppe erzeugten Magnetkraft gegen die Kraft einer Rückstellfeder 16 oder durch die Kraft der Rückstellfeder 16 antreibbar ist und einen Stößel 30 mit einem Schließelement 34 axial bewegt, und einen mit der Führungshülse 13 verbundenen Ventilkörper 15 mit einem Ventilsitz 15.1, welcher zwischen mindestens einer ersten Strömungsöffnung 15.2 und mindestens einer zweiten Strömungsöffnung 15.3 angeordnet ist, wobei der Stößel 30 fest mit dem Ventilanker 20 verbunden ist. Hierbei weist der Ventilkörper 15 einen Aufnahmebereich 19 auf, welcher eine Führungsbaugruppe 40 zumindest teilweise aufnimmt. Der Ventilanker 20 ist in mindestens einer Durchgangsöffnung 41.1, 44.1 der Führungsbaugruppe 40 axial geführt, wobei zwischen der Führungsbaugruppe 40 und dem Ventilanker 20 eine mechanische Rastvorrichtung 18 ausgebildet ist, welche geeignet ist, den Ventilanker 20 in einer in Fig. 1 dargestellten stromlosen Geschlossenstellung freizugeben, so dass die Rückstellfeder 16 den Ventilanker 20 antreibt und das Schließelement 34 zur Ausführung einer Dichtfunktion dichtend in den Ventilsitz 15.1 drückt und eine Fluidströmung zwischen der mindestens einen ersten Strömungsöffnung 15.2 und der mindestens einen zweiten Strömungsöffnung 15.3 unterbricht, und den Ventilanker 20 in einer in Fig. 11 dargestellten stromlosen Offenstellung gegen die Kraft der Rückstellfeder 16 in einer axialen Raststellung so festzulegen, dass das Schließelement 34 vom Ventilsitz 15.1 abgehoben und die Fluidströmung zwischen der mindestens einen ersten Strömungsöffnung 15.2 und der mindestens einen zweiten Strömungsöffnung 15.3 ermöglicht ist. Dadurch wird ein bistabiles Magnetventil 10 umgesetzt, welches durch Anlegen eines Umschaltsignals zwischen den beiden Stellungen umgeschaltet werden kann, wobei das Magnetventil 10 dauerhaft bis zum nächsten Umschaltsignal im jeweiligen Betriebszustand verbleibt.

Ein solches bistabiles Magnetventil 10 kann beispielsweise in einem hydraulischen Bremssystem 1 für ein Fahrzeug eingesetzt werden.

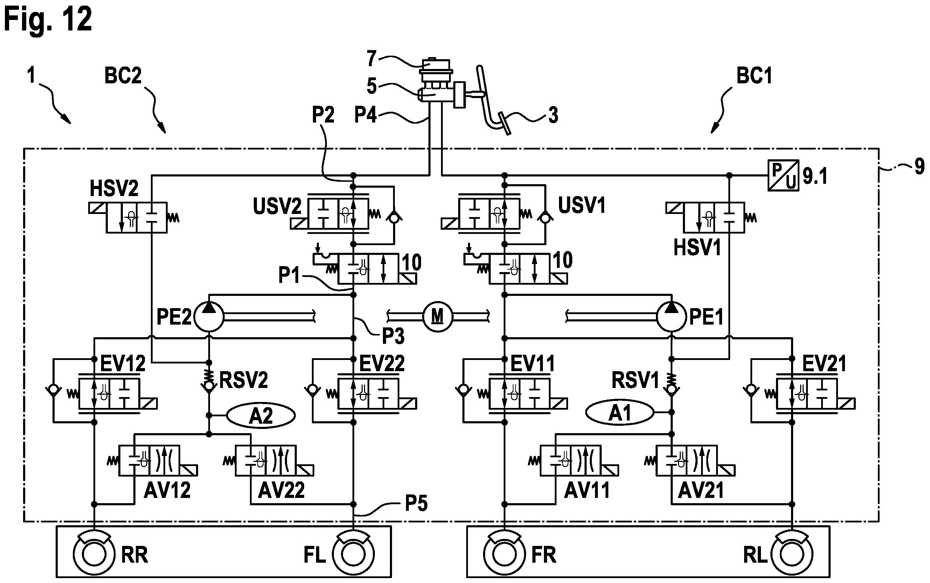

Wie aus Fig. 12 ersichtlich ist, umfasst das dargestellte Ausführungsbeispiel eines erfindungsgemäßen hydraulischen Bremssystems 1 für ein Fahrzeug, mit welchem verschiedene Sicherheitsfunktionen ausgeführt werden können, einen Hauptbremszylinder 5, eine Hydraulikeinheit 9 und mehrere Radbremsen RR, FL, FR, RL. Die Hydraulikeinheit 9 umfasst mindestens zwei Bremskreise BC1, BC2 zur Bremsdruckmodulation in den Radbremsen RR, FL, FR, RL. Hierbei weisen die mindestens zwei Bremskreise BC1, BC2 jeweils ein bistabiles Magnetventil 10 auf, welches eine stromlose Geschlossenstellung und eine stromlose Offenstellung aufweist und zwischen den beiden Stellungen umschaltbar ist, wobei das bistabile Magnetventil 10 in der stromlosen Offenstellung die Bremsdruckmodulation in mindestens einer zugeordneten Radbremse RR, FL, FR, RL freigibt und in der stromlosen Geschlossenstellung einen aktuellen Bremsdruck in der mindestens einen zugeordneten Radbremse RR, FL, FR, RL einschließt. Wie aus Fig. 12 weiter ersichtlich ist, umfasst das dargestellte Ausführungsbeispiel des hydraulischen Bremssystems 1 zwei Bremskreise BC1, BC2, welchen jeweils zwei der vier Radbremsen RR, FL, FR, RL zugeordnet sind. So sind eine erste Radbremse FR, welche beispielsweise an einer Fahrzeugvorderachse an der rechten Seite angeordnet ist, und eine zweite Radbremse RL, welche beispielsweise an einer Fahrzeughinterachse an der linken Seite angeordnet ist, einem ersten Bremskreis BC1 zugeordnet. Eine dritte Radbremse RR, welche beispielsweise an einer Fahrzeughinterachse an der rechten Seite angeordnet ist, und eine vierte Radbremse FL, welche beispielsweise an der Fahrzeugvorderachse an der linken Seite angeordnet ist, sind einem zweiten Bremskreis BC2 zugeordnet. Jeder Radbremse RR, FL, FR, RL ist ein Einlassventil EV11, EV21, EV12, EV22 und ein Auslassventil AV11, AV21, AV12, AV22 zugeordnet, wobei über die Einlassventile EV11, EV21, EV12, EV22 jeweils Druck in der korrespondierenden Radbremse RR, FL, FR, RL aufgebaut werden kann, und wobei über die Auslassventile AV11, AV21, AV12, AV22 jeweils Druck in der korrespondierenden Radbremse RR, FL, FR, RL abgebaut werden kann. Zum Druckaufbau in der jeweiligen Radbremse RR, FL, FR, RL wird das korrespondierende Einlassventil EV11, EV12, EV21, EV22 geöffnet und das korrespondierende Auslassventil AV11, AV12, AV21, AV22 geschlossen. Zum Druckabbau in der jeweiligen Radbremse RR, FL, FR, RL wird das korrespondierende Einlassventil EV11, EV21, EV12, EV22 geschlossen und das korrespondierende Auslassventil AV11, AV21, AV12, AV22 geöffnet.

Wie aus Fig. 12 weiter ersichtlich ist, sind der ersten Radbremse FR ein erstes Einlassventil EV11 und ein erstes Auslassventil AV11 zugeordnet, der zweiten Radbremse RL sind ein zweites Einlassventil EV21 und ein zweites Auslassventil AV21 zugeordnet, der dritten Radbremse RR sind ein drittes Einlassventil EV12 und ein drittes Auslassventil AV12 zugeordnet und der vierten Radbremse FL sind ein viertes Einlassventil EV22 und ein viertes Auslassventil AV22 zugeordnet. Über die Einlassventile EV11, EV21, EV12, EV22 und die Auslassventile AV11, AV21, AV12, AV22 können Steuer- und/öder Regelvorgänge zur Umsetzung einer ABS-Funktion durchgeführt werden.

Zudem weist der erste Bremskreis BC1 ein erstes Ansaugventil HSV1, ein erstes Systemdruckstellventil USV1, einen ersten Ausgleichsbehälter A1 mit einem ersten Rückschlagventil RSV1 und eine erste Fluidpumpe PE1 auf. Der zweite Bremskreis BC2 weist ein zweites Ansaugventil HSV2, ein zweites Systemdruckstellventil USV2, einen zweiten Ausgleichsbehälter A2 mit einem zweiten Rückschlagventil RSV2 und eine zweite Fluidpumpe PE2 auf, wobei die erste und zweite Fluidpumpe PE1, PE2 von einem gemeinsamen Elektromotor M angetrieben werden. Des Weiteren umfasst die Hydraulikeinheit 9 zur Ermittlung des aktuellen Systemdrucks bzw. Bremsdrucks eine Sensoreinheit 9.1. Die Hydraulikeinheit 9 verwendet zur Bremsdruckmodulation und zur Umsetzung einer ASR-Funktion und/oder einer ESP-Funktion im ersten Bremskreis BC1 das erste Systemdruckstellventil USV1, das erste Ansaugventil HSV1 und die erste Rückförderpumpe PE1 und im zweiten Bremskreis BC2 das zweite Systemdruckstellventil USV2, das zweite Ansaugventil HSV2 und die zweite Rückförderpumpe PE2. Wie aus Fig. 12 weiter ersichtlich ist, ist jeder Bremskreis BC1, BC2 mit dem Hauptbremszylinder 5 verbunden, welcher über ein Bremspedal 3 betätigt werden kann. Zudem ist ein Fluidbehälter 7 mit dem Hauptbremszylinder 5 verbunden. Die Ansaugventile HSV1, HSV2 ermöglichen einen Eingriff in das Bremssystem, ohne dass ein Fahrerwunsch vorliegt. Hierzu wird über die Ansaugventile HSV1, HSV2 der jeweilige Saugpfad für die korrespondierende Fluidpumpe PE1, PE2 zum Hauptbremszylinder 5 geöffnet, so dass diese anstelle des Fahrers den benötigten Druck für die Regelung bereitstellen kann. Die Systemdruckstellventile USV1, USV2 sind zwischen dem Hauptbremszylinder 5 und mindestens einer zugeordneten Radbremse RR, FL, FR, RL angeordnet und stellen den Systemdruck bzw. Bremsdruck im zugehörigen Bremskreis BC1, BC2 ein. Wie aus Fig. 12 weiter ersichtlich ist, stellt ein erstes Systemdruckstellventil USV1 den Systemdruck bzw. Bremsdruck im ersten Bremskreis BC1 ein und ein zweites Systemdruckstellventil USV2 stellt den Systemdruck bzw. Bremsdruck im zweiten Bremskreis BC2 ein.

Wie aus Fig. 12 weiter ersichtlich ist, können die bistabilen Magnetventile 10 an verschiedenen Positionen P1, P2, P3, P4, P5 in den jeweiligen Bremskreis BC1, BC2 eingeschleift werden. Bei den dargestellten Ausführungsbeispielen sind die verschiedenen Positionen P1, P2, P3, P4, P5 jeweils im zweiten Bremskreis BC2 bezeichnet. Wie aus Fig. 12 weiter ersichtlich ist, sind die bistabilen Magnetventile 10 jeweils an einer ersten Position P1 zwischen dem korrespondierenden Systemdruckstellventil USV1, USV2 und den Einlassventilen EV11, EV12, EV21, EV22 vor einem Auslasskanal der korrespondierenden Fluidpumpe PE1, PE2 in den jeweiligen Bremskreis BC1, BC2 eingeschleift. Alternativ können die bistabilen Magnetventile 10 jeweils an einer zweiten Position P2 zwischen dem Hauptbremszylinder 5 und dem korrespondierenden Systemdruckstellventil USV1, USV2 direkt vor dem korrespondierenden Systemdruckstellventil USV1, USV2 in den jeweiligen Bremskreis BC1, BC2 eingeschleift werden. Als weitere alternative Anordnung können die bistabilen Magnetventile 10 jeweils an einer dritten Position P3 zwischen dem korrespondierenden Systemdruckstellventil USV1, USV2 und den Einlassventilen EV11, EV12, EV21, EV22 nach dem Auslasskanal der Fluidpumpe PE1, PE2 in den jeweiligen Bremskreis BC1, BC2 eingeschleift werden. Zudem können die bistabilen Magnetventile 10 bei einer weiteren alternativen Anordnung jeweils an einer vierten Position P4 zwischen dem Hauptbremszylinder 5 und dem korrespondierenden Systemdruckstellventil USV1, USV2 im gemeinsamen Fluidzweig direkt nach dem Hauptbremszylinder 5 in den jeweiligen Bremskreis BC1, BC2 eingeschleift werden. Außerdem können die bistabilen Magnetventile 10 jeweils an einer fünften Position P5 direkt vor einer zugeordneten Radbremse RR, FL, FR, RL in den jeweiligen Bremskreis BC1, BC2 eingeschleift werden.

Wie aus Fig. 12 weiter ersichtlich ist, wird im dargestellten Ausführungsbeispiel des hydraulischen Bremssystems 1 ein elektrischer Energiespeicher in Form eines Fahrzeugbordnetzes verwendet, um den in der mindestens einen zugeordneten Radbremse RR, FL, FR, RL in der stromlosen Geschlossenstellung des bistabilen Magnetventils 10 eingeschlossenen Bremsdruck durch Nachfördern von Bremsfluid über die Fluidpumpe PE1, PE2 konstant zu halten. Da elektrische Energie nur zum Ventilschalten und für die kurze Nachförderfunktion erforderlich ist, ergibt sich nur ein geringer zusätzlicher elektrischer Energiebedarf für die Bremsdruckhaltefunktion. Alternativ können in einem nicht dargestellten Ausführungsbeispiel hydraulische Speichervorrichtungen verwendet werden, um den in der mindestens einen zugeordneten Radbremse RR, FL, FR, RL in der stromlosen Geschlossenstellung des bistabilen Magnetventils 10 eingeschlossenen Bremsdruck durch Nachfördern von Bremsfluid konstant zu halten. Da elektrische Energie nur zum Ventilschalten erforderlich ist, jedoch quasi keine elektrische Energie für die Nachförderfunktion erforderlich ist, ergibt sich durch die hydraulischen Speichervorrichtungen ein noch geringerer elektrischer Energiebedarf für die Bremsdruckhaltefunktion.

Durch die beschriebenen Maßnahmen ist in vorteilhafter Weise ein Ausgleich eventuell vorhandener interner Leckage und Volumenausdehnungen möglich, welche beispielsweise aufgrund von Temperaturgang auftreten können. Zudem können die beschriebenen Maßnahmen kombiniert werden. Das bedeutet, dass die hydraulische Speichervorrichtung mit der elektrischen Speichervorrichtung kombiniert werden kann, um in der stromlosen Geschlossenstellung des bistabilen Magnetventils 10 in der mindestens einen zugeordneten Radbremse RR, FL, FR, RL eingeschlossene Bremsdruck durch Nachförden von Bremsfluid über einen längeren Zeitraum konstant zu halten.

Wie aus Fig. 1 bis 11 weiter ersichtlich ist, ist die mechanische Rastvorrichtung 18 als Drehnockenmechanismus ausgeführt, welcher eine Umfangskraftkomponente nutzt, um eine Drehstellung zwischen dem Ventilanker 20 mit Schließelement 34 und der Führungsbaugruppe 40 zu verändern und den Ventilanker 20 mit Schließelement 34 axial in die Raststellung hinein und wieder heraus zu bewegen, so dass der Ventilanker 20 mit dem Schließelement 34 durch Anlegen eines Umschaltsignals an die Magnetbaugruppe zwischen den beiden stromlosen Stellungen wechseln kann. Die Führungsbaugruppe 40 ist im dargestellten Ausführungsbeispiel drehbeweglich zwischen einer Auflage 17 und einem Haltering 47 im Aufnahmebereich 19 des Ventilkörpers 15 gelagert. Zudem definieren die Auflage 17 und der Haltering 47 eine axiale Position der Führungsbaugruppe 40. Hierbei wird der Haltering 47 nach dem Einlegen der Führungsbaugruppe 40 in den Aufnahmebereich 19 des Ventilkörpers 15 so in den Ventilkörper 15 eingepresst, dass die Führungsbaugruppe 40 drehbar bleibt. Alternativ kann der Haltering 47 auch als C-förmiger Spannring ausgeformt werden und in einen Hinterschnitt im Ventilkörper 15 so einrasten, dass die Führungsbaugruppe 40 drehbar bleibt.

Im dargestellten Ausführungsbeispiel umfasst die Führungsbaugruppe 40 einen Steuerkäfig 41, welcher eine erste Durchgangsöffnung 41.1 und eine erste Führungsgeometrie 42 aufweist, und einen Steuerring 44, welcher eine zweite Durchgangsöffnung 44.1 und eine zweite Führungsgeometrie 45 aufweist. Der Steuerkäfig 41 und der Steuerring 44 sind im dargestellten Ausführungsbeispiel jeweils als Kunststoffteil ausgeführt und drehfest miteinander verbunden. Hierbei ist der Steuerring 44 in den Steuerkäfig 41 eingeführt und drei am Steuerring 44 ausgebildete Positionierungsnasen 44.2 sind in korrespondierende am Steuerkäfig 41 ausgebildete Positionierungsaussparungen 41.2 gefügt. Selbstverständlich können auch weniger oder mehr als drei Positionierungsnasen 44.2 und Positionierungsaussparungen 41.2 verwendet werden, um den Steuerring 44 drehfest mit dem Steuerkäfig 41 zu verbinden. Zudem kann der Steuerring 44 bei einem alternativen nicht dargestellten Ausführungsbeispiel als Stanz-Biege-Blechteil ausgeführt werden. Alternativ kann die Führungsbaugruppe 40 mit Steuerkäfig 41 und Steuerring 44 einteilig als Zweikomponentenkunststoffspritzgussteil ausgeführt werden.

Der Ventilanker 20 weist im dargestellten Ausführungsbeispiel einen gestuften zylindrischen Grundkörper 22 mit zwei verschiedenen Außendurchmessern auf, wobei ein in der mindestens einen Durchgangsöffnung 41.1, 44.1 der Führungsbaugruppe 40 geführter Abschnitt des Grundkörpers 22 des Ventilankers 20 eine dritte Führungsgeometrie 28 aufweist, welche bei einer axialen Bewegung des Ventilankers 20 in Richtung Polkern 11 mit der ersten Führungsgeometrie 42 des Steuerkäfigs 40 und bei einer axialen Bewegung des Ventilankers 20 in Richtung Ventilsitz 15.1 mit der zweiten Führungsgeometrie 45 des Steuerrings 44 zusammenwirkt und eine Drehbewegung des Ventilankers 20 und/oder der Führungsbaugruppe 40 um eine gemeinsame Längsachse erzeugt. Der Ventilanker 20 ist durch einen außerhalb der Führungsbaugruppe 40 angeordneten Abschnitt des Grundkörpers 22 an einer Innenwand der Führungshülse 13 radial geführt. Wie insbesondere aus Fig. 1 und 11 weiter ersichtlich ist, weist der Grundkörper 22 des Ventilankers 20 an seinem dem Ventilsitz 15.1 zugewandten Ende eine Vertiefung 24 auf, in welche ein Ende des Grundkörper 32 des Stößels 30 eingepresst ist. Am anderen Ende des Grundkörpers 32 ist das Schließelement 34 ausgebildet, welches die Spitze des Stößels 30 bildet und zur Ausübung der Dichtfunktion mit dem Ventilsitz 15.1 zusammenwirkt. Im dargestellten Ausführungsbeispiel ist der Stößel 30 als Kunststoffspritzgussteil ausgeführt. Alternativ kann der Stößel 30 in einem PIM-, CIM- oder MIM-Verfahren oder als 3D-Druckteil hergestellt werden. Zusätzlich kann am Schließelement 34 ein Dichtelement angeordnet werden, um die Dichtwirkung im Ventilsitz 15.1 zu verbessern. Das Dichtelement kann beispielsweise als O-Ring-Dichtung ausgeführt werden. An seinem dem Polkern 11 zugewandten Ende weist der Grundkörper 22 des Ventilankers 20 eine Federaufnahme 26 auf, welche die Rückstellfeder 16 zumindest teilweise aufnimmt. Die Rückstellfeder 16 stützt sich an einem Ende auf einer dem Ventilanker 20 zugewandten Polfläche des Polkerns 11 und am anderen Ende an einer Auflage in der Federaufnahme 26 ab. In einer alternativen nicht dargestellten Ausführungsform kann die Federaufnahme 26 auch im Polkern 11 eingebracht werden, so dass sich die Rückstellfeder 16 an der dem Polkern 11 zugewandten Stirnfläche des Ventilankers 20 und in der Federaufnahme 26 abstützt. Im dargestellten Ausführungsbeispiel ist die Federaufnahme 26 über eine Ausgleichsbohrung mit der Vertiefung 24 verbunden. Ein zwischen der Polfläche des Polkerns 11 und einer Polfläche des Ventilankers 20 ausgebildeter Luftspalt 12 gibt einen maximal möglichen Ankerhub vor.

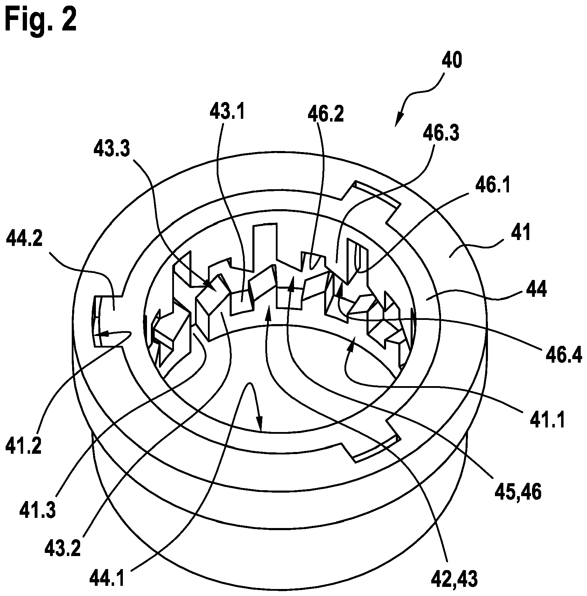

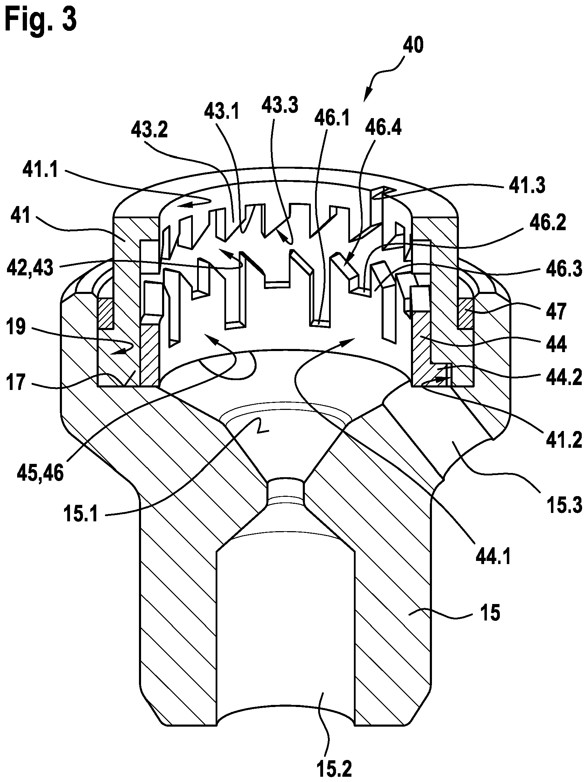

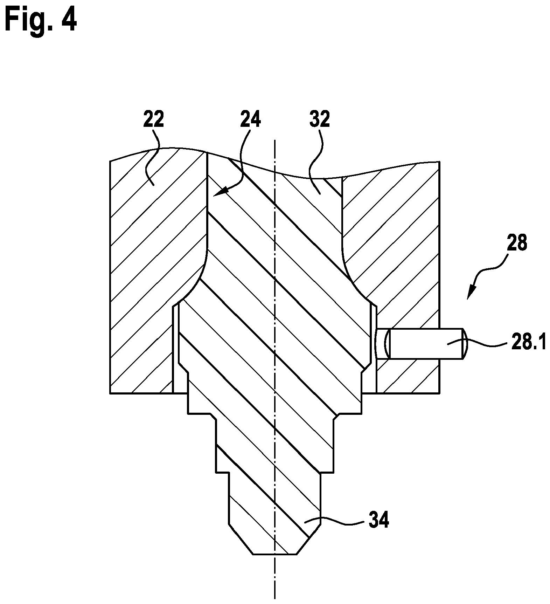

Wie insbesondere aus Fig. 2 und 3 weiter ersichtlich ist, weist die erste Führungsgeometrie 42 eine erste umlaufende Kulissenführung 43 mit an einer Wandung der ersten Durchgangsöffnung 41.1 in gleichmäßiger Winkelteilung ausgebildeten ersten Aussparungen 43.1 auf, welche durch erste Trennstege 43.2 voneinander getrennt sind. An den ersten Trennstegen 43.2 ist jeweils eine einseitige Anschrägung 43.3 ausgebildet. Im dargestellten Ausführungsbeispiel sind achtzehn erste Aussparungen 43.1 mit einer Winkelteilung von 18 x 20° und einer Breite von jeweils 10° an der Wandung der ersten Durchgangsöffnung 41.1 ausgebildet. Das bedeutet, dass die ersten Trennstege 43.2 zwischen den ersten Aussparungen 43.1 ebenfalls eine Breite von jeweils 10° aufweisen. Die zweite Führungsgeometrie 45 weist eine zweite umlaufende Kulissenführung 46 mit an einer Wandung der zweiten Durchgangsöffnung 44.1 in gleichmäßiger Winkelteilung ausgebildeten zweiten Aussparungen 46.1, 46.2 mit unterschiedlichen axialen Tiefen auf, welche durch zweite Trennstege 46.3 voneinander getrennt sind. An den zweiten Trennstegen 46.3 ist jeweils eine einseitige Abschrägung 46.4 ausgebildet. Im dargestellten Ausführungsbeispiel sind achtzehn zweite Aussparungen 46.1, 46.2 mit einer Winkelteilung von 18 x 20° und einer Breite von jeweils 10° an der Wandung der zweiten Durchgangsöffnung 44.1 ausgebildet. Das bedeutet, dass die zweiten Trennstege 46.3 zwischen den zweiten Aussparungen 46.1, 46.2 ebenfalls eine Breite von jeweils 10° aufweisen. Wie aus Fig. 2 und 3 weiter ersichtlich ist, sind die ersten Trennstege 43.2 versetzt zu den zweiten Trennstegen 46.3 angeordnet. Im dargestellten Ausführungsbeispiel beträgt der Versatz zwischen den ersten Trennstegen 43.2 und den zweiten Trennstegen 46.3 jeweils 10°. Dadurch sind die Anschrägungen 43.3 der ersten Trennstege 43.2 gegenüber den zweiten Aussparungen 46.1, 46.2 und die Abschrägungen 46.4 der zweiten Trennstege 46.3 sind gegenüber den ersten Aussparungen 43.1 angeordnet. Wie insbesondere aus Fig. 4 ersichtlich ist, umfasst die dritte Führungsgeometrie 28 im dargestellten Ausführungsbeispiel ein radial abstehendes abgerundetes Positionierungselement 28.1, welches in eine Radialbohrung des Grundkörpers 22 des Ventilankers 20 einpresst ist. Alternativ kann das Positionierungselement 28.1 mit einem eckigen, vorzugsweise mit einem dreieckigen Querschnitt ausgeführt werden, so dass Flächen des Positionierungselements 28.1 parallel zu den korrespondierenden Anschrägungen 43.3 oder Abschrägungen 46.4 ausgerichtet sind. Zudem kann das mindestens eine Positionierungselement 28.1 alternativ einstückig mit dem Ventilanker 20 ausgeführt werden, so dass auf den Einpressvorgang verzichtet werden kann. Das Positionierungselement 28.1 kann über eine im Steuerkäfig 41 angeordnete Einführaussparung 41.3 ins Innere der Führungsbaugruppe 40 eingeführt werden und mit der ersten und zweiten Kulissenführung 43, 46 zusammenwirken. Die genannte Anzahl von jeweils achtzehn ersten Aussparungen 43.1 und zweiten Aussparungen 46.1, 46 ist ebenso wie die Winkelteilung von 20° und die Breite von 10° nur beispielhaft und dient der einfacheren Erklärung. Eine andere Aufteilung über den 360° Umfang ist selbstverständlich möglich.

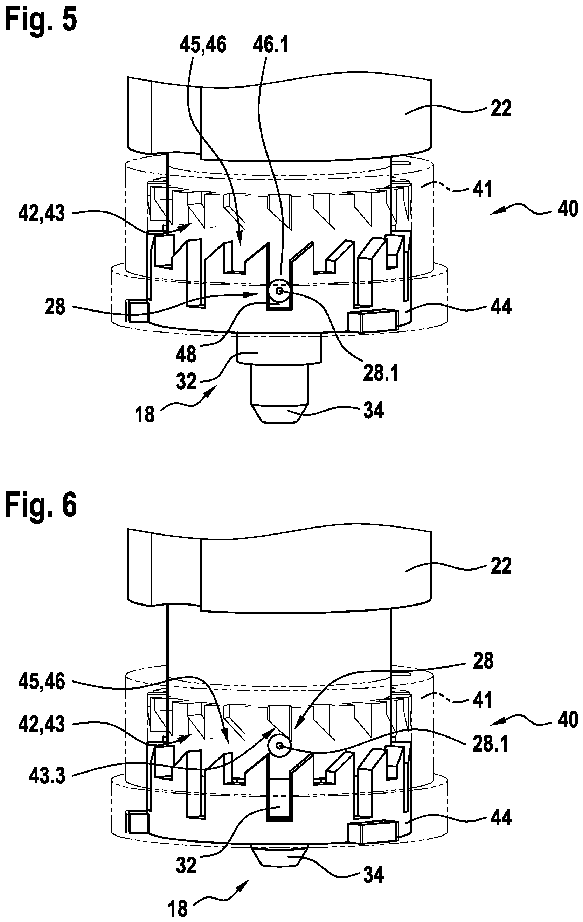

Nachfolgend wird unter Bezugnahme auf Fig. 5 bis 10 der Bewegungsablauf des Ventilankers 20 mit Schließelement 34 ausgehend von der in Fig. 1 dargestellten stromlosen Geschlossenstellung in die in Fig. 11 dargestellte stromlose Offenstellung beschrieben.

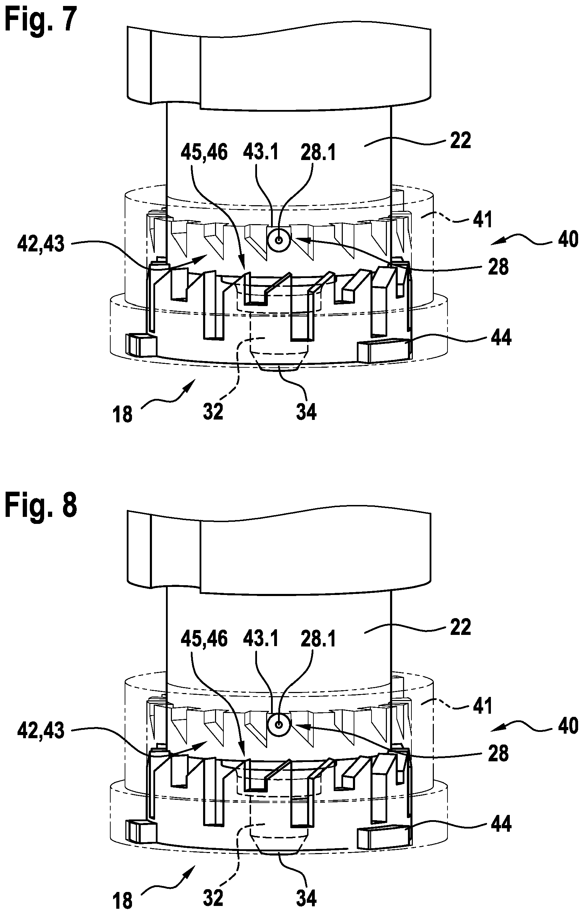

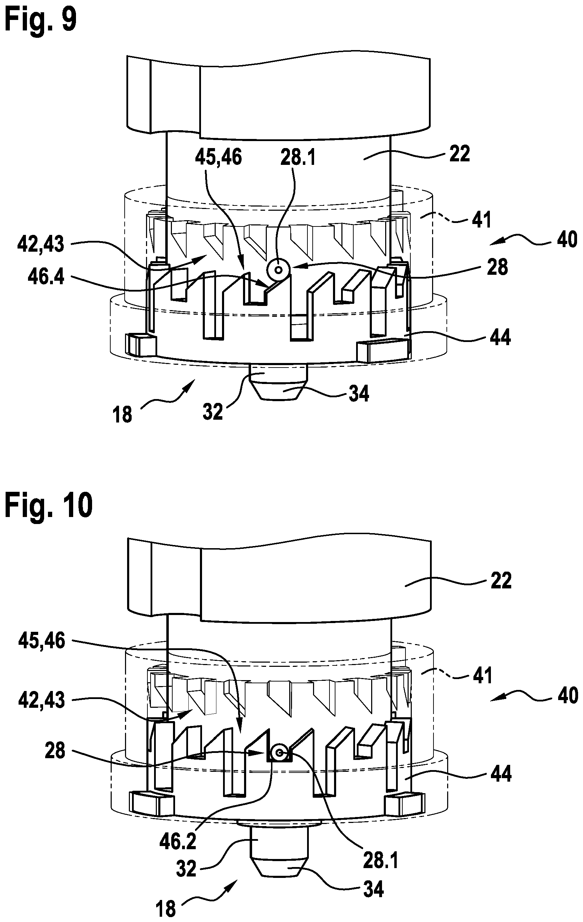

Wie aus Fig. 5 weiter ersichtlich ist, ist das Positionierungselement 28.1 in der stromlosen Geschlossenstellung in einer tiefen zweiten Aussparung 46.1 geführt und das Schließelement 34 liegt dichtend im Ventilsitz 15.1 an, wie aus Fig. 1 ersichtlich ist. Ein zusätzlicher axialer Freiraum 48 zwischen dem Positionierungselement 28.1 und dem Boden der tiefen zweiten Aussparung 46.1 ist vorteilhaft zum Ausgleich von Längentoleranzen. Im dargestellten Ausführungsbeispiel wird nur ein Positionierungselement 28.1 verwendet. Selbstverständlich können auch mehrere über den Umfang verteilte Positionierungselemente 28.1 verwendet werden, um die Führung zu verbessern. Wie aus Fig. 6 weiter ersichtlich ist, nimmt der Ventilanker 20 bei einer durch Magnetkraft der Magnetbaugruppe bewirkten Axialbewegung in Richtung Polkern 11 den Stößel 30 und sein Schließelement 34 mit, wobei das abgerundete Positionierungselement 28.1 ausgehend von der Position in der tiefen zweiten Aussparung 46.1 tangential auf eine korrespondierende Anschrägung 43.3 des Steuerkäfigs 41 trifft. In Fig. 6 ist der Moment während der Aufwärtsbewegung des Ventilankers 20 dargestellt, in dem das abgerundete Positionierungselement 28.1 Kontakt mit der Anschrägung 43.3 des Steuerkäfigs 41 bekommt. Dadurch wirkt eine Umfangskraft auf die Führungsbaugruppe 40 und/oder den Ventilanker 20 und die Führungsbaugruppe 40 und/oder der Ventilanker 20 drehen sich um die korrespondierende Längsachse bis das abgerundete Positionierungselement 28.1 am Ende der Anschrägung 43.3 in eine korrespondierende erste Aussparung 43.1 gleitet, wie aus Fig. 7 ersichtlich ist, und einen vorgegebenen in Fig. 8 dargestellten maximalen Axialhub erreicht und am Boden der ersten Aussparung 43.1 anliegt. Alternativ kann der Abstand zwischen dem Positionierungselement 28.1 und dem Boden der ersten Aussparung 43.1 so gewählt werden, dass der maximale Arbeitshub durch den Anschlag des Ventilankers 20 am Polkern 11 bzw. durch den Luftspalt 12 zwischen dem Ventilanker 20 und dem Polkern 11 vorgegeben wird. Nach dem Abschalten der Magnetkraft bewirkt die Federkraft der Rückstellfeder 16 die Axialbewegung des Ventilankers 20 in Richtung Ventilsitz 15.1. Dabei bewegt sich das abgerundete Positionierungselement 28.1 aus der ersten Aussparung 43.1 und trifft tangential auf eine korrespondierende Abschrägung 46.3 des Steuerrings 44, wie aus Fig. 9 ersichtlich ist. In Fig. 9 ist der Moment während der Abwärtsbewegung des Ventilankers 20 dargestellt, in dem das abgerundete Positionierungselement 28.1 Kontakt mit der Abschrägung 46.4 des Steuerrings 44 bekommt. Dadurch wirkt eine Umfangskraft auf die Führungsbaugruppe 40 und/oder den Ventilanker 20 und dreht die Führungsbaugruppe 40 und/oder den Ventilanker 20 um die korrespondierende Längsachse weiter bis das abgerundete Positionierungselement 28.1 am Ende der Abschrägung 46.3 in eine korrespondierende flache zweite Aussparung 46.2 gleitet, wie aus Fig. 10 ersichtlich ist. In der nun erreichten stromlosen Offenstellung liegt das abgerundete Positionierungselement 28.1 an einem Anschlag in der flachen zweiten Ausformung 46.2 an. Von der in Fig. 10 dargestellten stromlosen Offenstellung aus, wird sich das beschriebene Prinzip beim nächsten Bestromen der Magnetbaugruppe wiederholen, so dass sich danach die stromlose Geschlossenstellung einstellt.

Bei der oben beschriebenen Lösung können sich ohne Funktionsnachteil sowohl die Führungsbaugruppe 40 als auch der Ventilanker 20 oder beide drehen, je nachdem wo weniger Reibung zu überwinden ist. Um gezielt nur die Bewegung einer Baugruppe zuzulassen kann entweder die Führungsbaugruppe 40 fest anstatt drehbeweglich im Ventilkörper 15 befestigt werden oder es kann ein Verdrehschutz für den Ventilanker 20 vorgesehen werden. Ein solcher Verdrehschutz kann beispielsweise durch einen Formschluss des Ventilankers 20 mit der Führungshülse 13 oder mit dem Polkern 11 umgesetzt werden.

## Patentansprüche

1. Magnetventil (10) für ein hydraulisches Bremssystem (1), mit einer Magnetbaugruppe, einem Polkern (11), einer mit dem Polkern (11) verbundenen Führungshülse (13), einem innerhalb der Führungshülse (13) axial beweglich geführten Ventilanker (20), welcher von einer durch die Magnetbaugruppe erzeugten Magnetkraft gegen die Kraft einer Rückstellfeder (16) oder durch die Kraft der Rückstellfeder (16) antreibbar ist und einen Stößel (30) mit einem Schließelement (34) axial bewegt, und einem mit der Führungshülse (13) verbundenen Ventilkörper (15) mit einem Ventilsitz (15.1), welcher zwischen mindestens einer ersten Strömungsöffnung (15.2) und mindestens einer zweiten Strömungsöffnung (15.3) angeordnet ist, wobei der Stößel (30) fest mit dem Ventilanker (20) verbunden ist, wobei der Ventilkörper (15) einen Aufnahmebereich (19) aufweist, **dadurch gekennzeichnet dass** der Aufnahmebereich (19) eine Führungsbaugruppe (40) zumindest teilweise aufnimmt, wobei der Ventilanker (20) in mindestens einer Durchgangsöffnung (41.1, 44.1) der Führungsbaugruppe (40) axial geführt ist, wobei zwischen der Führungsbaugruppe (40) und dem Ventilanker (20) eine mechanische Rastvorrichtung (18) ausgebildet ist, welche geeignet ist, den Ventilanker (20) in einer stromlosen Geschlossenstellung freizugeben, so dass die Rückstellfeder (16) den Ventilanker (20) antreibt und das Schließelement (34) zur Ausführung einer Dichtfunktion dichtend in den Ventilsitz (15.1) drückt, und den Ventilanker (20) in einer stromlosen Offenstellung gegen die Kraft der Rückstellfeder (16) in einer axialen Raststellung so festzulegen, dass das Schließelement (34) vom Ventilsitz (15.1) abgehoben ist.

2. Magnetventil nach Anspruch 1, **dadurch gekennzeichnet, dass** die mechanische Rastvorrichtung (18) als Drehnockenmechanismus ausgeführt ist, welcher eine Umfangskraftkomponente nutzt, um eine Drehstellung zwischen dem Ventilanker (20) mit Schließelement (34) und der Führungsbaugruppe (40) zu verändern und den Ventilanker (20) mit Schließelement (34) axial in die Raststellung hinein und wieder heraus zu bewegen, so dass der Ventilanker (20) mit dem Schließelement (34) durch Anlegen eines Umschaltsignals an die Magnetbaugruppe zwischen den beiden stromlosen Stellungen wechselt.

3. Magnetventil nach Anspruch 1 oder 2, **dadurch gekennzeichnet, dass** die Führungsbaugruppe (40) drehbeweglich oder drehfest im Aufnahmebereich (19) des Ventilkörpers (15) gelagert ist.

4. Magnetventil nach einem der Ansprüche 1 bis 3, **dadurch gekennzeichnet, dass** die Führungsbaugruppe (40) einen Steuerkäfig (41), welcher eine erste Durchgangsöffnung (41.1) und eine erste Führungsgeometrie (42) aufweist, und einen Steuerring (44) umfasst, welcher eine zweite Durchgangsöffnung (44.1) und eine zweite Führungsgeometrie (45) aufweist.

5. Magnetventil nach Anspruch 4, **dadurch gekennzeichnet, dass** der Steuerkäfig (41) und der Steuerring (44) jeweils als Einzelteil ausgeführt sind oder die Führungsbaugruppe (40) mit Steuerkäfig (41) und Steuerring (44) einteilig ausgeführt ist.

6. Magnetventil nach Anspruch 4, **dadurch gekennzeichnet, dass** der Steuerkäfig (41) und der Steuerring (44) drehfest miteinander verbunden sind, wobei der Steuerring (44) in den Steuerkäfig (41) eingeführt ist und mindestens eine am Steuerring (44) ausgebildete Positionierungsnase (44.2) in eine korrespondierende am Steuerkäfig ausgebildete Positionierungsaussparung (41.2) gefügt ist.

7. Magnetventil nach einem der Ansprüche 4 bis 6, **dadurch gekennzeichnet, dass** der Ventilanker (20) einen gestuften zylindrischen Grundkörper (22) mit zwei verschiedenen Außendurchmessern aufweist, wobei ein in der mindestens einen Durchgangsöffnung (41.1, 44.1) der Führungsbaugruppe (40) geführter Abschnitt des Grundkörpers (22) des Ventilankers (20) eine dritte Führungsgeometrie (28) aufweist, welche bei einer axialen Bewegung des Ventilankers (20) in Richtung Polkern (11) mit der ersten Führungsgeometrie (42) des Steuerkäfigs (40) und bei einer axialen Bewegung des Ventilankers (20) in Richtung Ventilsitz (15.1) mit der zweiten Führungsgeometrie (45) des Steuerrings (44) zusammenwirkt, und eine Drehbewegung des Ventilankers (20) und/oder der Führungsbaugruppe (40) um eine gemeinsame Längsachse erzeugt, wobei der Ventilanker (20) durch einen außerhalb der Führungsbaugruppe (40) angeordneten Abschnitt des Grundkörpers (22) an einer Innenwand der Führungshülse (13) drehbeweglich oder mit einem Verdrehschutz radial geführt ist.

8. Magnetventil nach einem der Ansprüche 4 bis 7, **dadurch gekennzeichnet, dass** die erste Führungsgeometrie (42) eine erste umlaufende Kulissenführung (43) mit an einer Wandung der ersten Durchgangsöffnung (41.1) in gleichmäßiger Winkelteilung ausgebildeten ersten Aussparungen (43.1) aufweist, welche durch erste Trennstege (43.2) voneinander getrennt sind, an welchen jeweils eine einseitige Anschrägung (43.3) ausgebildet ist, wobei die zweite Führungsgeometrie (45) eine zweite umlaufende Kulissenführung (46) mit an einer Wandung der zweiten Durchgangsöffnung (44.1) in gleichmäßiger Winkelteilung ausgebildeten zweiten Aussparungen (46.1, 46.2) mit unterschiedlichen axialen Tiefen aufweist, welche durch zweite Trennstege (46.3) voneinander getrennt sind, an welchen jeweils eine einseitige Abschrägung (46.4) ausgebildet ist, wobei die ersten Trennstege (43.2) versetzt zu den zweiten Trennstegen (46.3) angeordnet sind, und wobei die dritte Führungsgeometrie (28) mindestens ein radial abstehendes Positionierungselement (28.1) aufweist.

9. Magnetventil nach Anspruch 8, **dadurch gekennzeichnet, dass** der Ventilanker (20) bei einer durch Magnetkraft der Magnetbaugruppe bewirkten Axialbewegung in Richtung Polkern (11) den Stößel (30) und sein Schließelement (34) mitnimmt, wobei das mindestens eine Positionierungselement (28.1) ausgehend von einer Position in einer zweiten Aussparung (46.1, 46.2) auf eine korrespondierende Anschrägung (43.3) des Steuerkäfigs (41) trifft, wodurch eine Umfangskraft auf die Führungsbaugruppe (40) und/oder den Ventilanker (20) wirkt und die Führungsbaugruppe (40) und/oder den Ventilanker (20) um eine korrespondierende Längsachse dreht bis das mindestens eine Positionierungselement (28.1) am Ende der Anschrägung (43.3) in eine korrespondierende erste Aussparung (43.1) gleitet, wobei bei der durch die Federkraft der Rückstellfeder (16) bewirkten Axialbewegung des Ventilankers (20) in Richtung Ventilsitz (15.1) das mindestens eine Positionierungselement (28.1) aus der ersten Aussparung (43.1) auf eine korrespondierende Abschrägung (46.3) des Steuerrings (44) trifft, wodurch eine Umfangskraft auf die Führungsbaugruppe (40) und/oder den Ventilanker (20) wirkt und die Führungsbaugruppe (40) und/oder den Ventilanker (20) um die korrespondierende Längsachse weiterdreht bis das mindestens eine Positionierungselement (28.1) am Ende der Abschrägung (46.3) in eine korrespondierende zweite Aussparung (46.1, 46.2) gleitet.

10. Magnetventil nach Anspruch 9, **dadurch gekennzeichnet, dass** in der stromlosen Offenstellung das mindestens eine Positionierungselement (28.1) an einem Anschlag in einer flachen zweiten Ausformung (46.2) anliegt und in der stromlosen Geschlossenstellung in einer tiefen zweiten Ausformung (46.1) bis zum Anschlag des Schließelements (34) im Ventilsitz (15.1) geführt ist.

11. Hydraulisches Bremssystem (1) für ein Fahrzeug, mit einem Hauptbremszylinder (5), einer Hydraulikeinheit (9) und mehreren Radbremsen (RR, FL, FR, RL), wobei die Hydraulikeinheit (9) mindestens zwei Bremskreise (BC1, BC2) zur Bremsdruckmodulation in den Radbremsen (RR, FL, FR, RL) umfasst, **dadurch gekennzeichnet, dass** die mindestens zwei Bremskreise (BC1, BC2) jeweils mindestens ein bistabiles Magnetventil (10) aufweisen, welches nach zumindest einem der Ansprüche 1 bis 10 ausgeführt ist und in der stromlosen Offenstellung die Bremsdruckmodulation in mindestens einer zugeordneten Radbremse (RR, FL, FR, RL) freigibt und in der stromlosen Geschlossenstellung einen aktuellen Bremsdruck in der mindestens einen zugeordneten Radbremse (RR, FL, FR, RL) einschließt.

## Claims

1. Solenoid valve (10) for a hydraulic brake system (1), having a solenoid assembly, having a pole core (11), having a guide sleeve (13) connected to the pole core (11), having a valve armature (20) which is guided in axially movable fashion within the guide sleeve (13) and which can be driven counter to the force of a resetting spring (16) by a magnet force generated by the solenoid assembly or can be driven by the force of the resetting spring (16) and which axially moves a plunger (30) with a closing element (34), and having a valve body (15) which is connected to the guide sleeve (13) and which has a valve seat (15.1) which is arranged between at least one first flow opening (15.2) and at least one second flow opening (15.3), wherein the plunger (30) is fixedly connected to the valve armature (20), wherein the valve body (15) has a receiving region (19), **characterized in that** the receiving region (19) at least partially receives a guide assembly (40), wherein the valve armature (20) is guided axially in at least one passage opening (41.1, 44.1) of the guide assembly (40), wherein a mechanical detent device (18) is formed between the guide assembly (40) and the valve armature (20), which mechanical detent device is suitable for releasing the valve armature (20) in an electrically deenergized closed position such that the resetting spring (16) drives the valve armature (20) and pushes the closing element (34) sealingly into the valve seat (15.1) in order to perform a sealing function, and for fixing the valve armature (20) in an electrically deenergized open position, counter to the force of the resetting spring (16), in an axial detent position such that the closing element (34) is lifted off from the valve seat (15.1).

2. Solenoid valve according to Claim 1, **characterized in that** the mechanical detent device (18) is designed as a rotary cam mechanism which utilizes a circumferential force component in order to vary a rotational position between the valve armature (20) with closing element (34) and the guide assembly (40) and in order to move the valve armature (20) with closing element (34) axially into the detent position and out of said detent position again, such that the valve armature (20) with the closing element (34) switches between the two electrically deenergized positions as a result of application of a switching signal to the solenoid assembly.

3. Solenoid valve according to Claim 1 or 2, **characterized in that** the guide assembly (40) is mounted in rotationally movable or rotationally fixed fashion in the receiving region (19) of the valve body (15).

4. Solenoid valve according to any of Claims 1 to 3, **characterized in that** the guide assembly (40) has a control cage (41), which has a first passage opening (41.1) and a first guide geometry (42), and a control ring (44), which has a second passage opening (44.1) and a second guide geometry (45).

5. Solenoid valve according to Claim 4, **characterized in that** the control cage (41) and the control ring (44) are each formed as individual parts, or the guide assembly (40) is formed in one piece with control cage (41) and control ring (44).

6. Solenoid valve according to Claim 4, **characterized in that** the control cage (41) and the control ring (44) are connected rotationally conjointly to one another, wherein the control ring (44) is inserted into the control cage (41), and at least one positioning lug (44.2) formed on the control ring (44) is inserted into a corresponding positioning aperture (41.2) formed on the control cage.

7. Solenoid valve according to any of Claims 4 to 6, **characterized in that** the valve armature (20) has a stepped cylindrical main body (22) with two different outer diameters, wherein a portion, which is guided in the at least one passage opening (41.1, 44.1) of the guide assembly (40), of the main body (22) of the valve armature (20) has a third guide geometry (28) which interacts with the first guide geometry (42) of the control cage (40) during an axial movement of the valve armature (20) in the direction of the pole core (11) and which interacts with the second guide geometry (45) of the control ring (44) during an axial movement of the valve armature (20) in the direction of the valve seat (15.1), and which generates a rotational movement of the valve armature (20) and/or of the guide assembly (40) about a common longitudinal axis, wherein the valve armature (20) is, by means of a portion of the main body (22) arranged outside the guide assembly (40), guided radially in rotationally movable fashion or with a rotation prevention action on an inner wall of the guide sleeve (13).

8. Solenoid valve according to any of Claims 4 to 7, **characterized in that** the first guide geometry (42) has a first encircling slotted guide (43) with first apertures (43.1) formed with a uniform angular pitch on a wall of the first passage opening (41.1), which first apertures are separated from one another by first separating webs (43.2) on which there is formed in each case one unilateral bevel (43.3), wherein the second guide geometry (45) has a second encircling slotted guide (46) with second apertures (46.1, 46.2) with different axial depths formed with a uniform angular pitch on a wall of the second passage opening (44.1), which second apertures are separated from one another by second separating webs (46.3) on which there is formed in each case one unilateral bevel (46.4), wherein the first separating webs (43.2) are arranged offset with respect to the second separating webs (46.3), and wherein the third guide geometry (28) has at least one radially projecting positioning element (28.1).

9. Solenoid valve according to Claim 8, **characterized in that**, during an axial movement, effected by magnetic force of the solenoid assembly, in the direction of the pole core (11), the valve armature (20) concomitantly drives the plunger (30) and its closing element (34), wherein the at least one positioning element (28.1), proceeding from a position in a second aperture (46.1, 46.2), abuts against a corresponding bevel (43.3) of the control cage (41), whereby a circumferential force acts on the guide assembly (40) and/or on the valve armature (20), and rotates the guide assembly (40) and/or the valve armature (20) about a corresponding longitudinal axis until the at least one positioning element (28.1) slides, at the end of the bevel (43.3), into a corresponding first aperture (43.1), wherein, during the axial movement, effected by the spring force of the resetting spring (16), of the valve armature (20) in the direction of the valve seat (15.1), the at least one positioning element (28.1) abuts, from the first aperture (43.1), against a corresponding bevel (46.3) of the control ring (44), whereby a circumferential force acts on the guide assembly (40) and/or on the valve armature (20) and rotates the guide assembly (40) and/or the valve armature (20) further about the corresponding longitudinal axis until the at least one positioning element (28.1) slides, at the end of the bevel (46.3), into a corresponding second aperture (46.1, 46.2).

10. Solenoid valve according to Claim 9, **characterized in that**, in the electrically deenergized open position, the at least one positioning element (28.1) bears against a stop in a shallow second recess (46.2) and, in the electrically deenergized closed position, is guided in a deep second recess (46.1) until the closing element (34) makes abutting contact in the valve seat (15.1).

11. Hydraulic brake system (1) for a vehicle, having a master brake cylinder (5), having a hydraulics unit (9) and having multiple wheel brakes (RR, FL, FR, RL), wherein the hydraulics unit (9) comprises at least two brake circuits (BC1, BC2) for brake pressure modulation in the wheel brakes (RR, FL, FR, RL), **characterized in that** the at least two brake circuits (BC1, BC2) each have at least one bistable solenoid valve (10) which is designed according to at least one of Claims 1 to 10 and which, in the electrically deenergized open position, enables the brake pressure modulation in at least one associated wheel brake (RR, FL, FR, RL) and, in the electrically deenergized closed position, encloses a present brake pressure in the at least one associated wheel brake (RR, FL, FR, RL).

## Revendications

1. Soupape électromagnétique (10) pour un système de freinage hydraulique (1), comprenant un module magnétique, un noyau polaire (11), une douille de guidage (13) connectée au noyau polaire (11), un induit de soupape (20) guidé de manière déplaçable axialement à l'intérieur de la douille de guidage (13), qui peut être entraîné par une force magnétique générée par le module magnétique à l'encontre de la force d'un ressort de rappel (16) ou par la force du ressort de rappel (16) et qui déplace axialement un poussoir (30) avec un élément de fermeture (34), et un corps de soupape (15) connecté à la douille de guidage (13), avec un siège de soupape (15.1), lequel est disposé entre au moins une première ouverture d'écoulement (15.2) et au moins une deuxième ouverture d'écoulement (15.3), le poussoir (30) étant connecté fixement à l'induit de soupape (20), le corps de soupape (15) présentant une région de réception (19), **caractérisée en ce que** la région de réception (19) reçoit au moins en partie un module de guidage (40), l'induit de soupape (20) étant guidé axialement dans au moins une ouverture de passage (41.1, 44.1) du module de guidage (40), un dispositif d'encliquetage mécanique (18) étant réalisé entre le module de guidage (40) et l'induit de soupape (20), lequel est approprié pour libérer l'induit de soupape (20) dans une position fermée non alimentée en courant, de telle sorte que le ressort de rappel (16) entraîne l'induit de soupape (20) et presse l'élément de fermeture (34) hermétiquement dans le siège de soupape (15.1) pour réaliser une fonction d'étanchéité, et pour fixer l'induit de soupape (20) dans une position ouverte non alimentée en courant à l'encontre de la force du ressort de rappel (16) dans une position d'encliquetage axiale de telle sorte que l'élément de fermeture (34) soit soulevé du siège de soupape (15.1).

2. Soupape électromagnétique selon la revendication 1, **caractérisée en ce que** le dispositif d'encliquetage mécanique (18) est réalisé sous forme de mécanisme à came rotative qui utilise une composante de force périphérique pour modifier une position de rotation entre l'induit de soupape (20) avec l'élément de fermeture (34) et le module de guidage (40) et pour déplacer l'induit de soupape (20) avec l'élément de fermeture (34) axialement dans la position d'encliquetage et à nouveau hors de celle-ci, de telle sorte que l'induit de soupape (20) avec l'élément de fermeture (34), par application d'un signal de commutation au niveau du module magnétique, commute entre les deux positions non alimentées en courant.

3. Soupape électromagnétique selon la revendication 1 ou 2, **caractérisée en ce que** le module de guidage (40) est supporté de manière déplaçable en rotation ou de manière solidaire en rotation dans la région de réception (19) du corps de soupape (15).

4. Soupape électromagnétique selon l'une quelconque des revendications 1 à 3, **caractérisée en ce que** le module de guidage (40) comprend une cage de commande (41) qui présente une première ouverture de passage (41.1) et une première géométrie de guidage (42), et comprend une bague de commande (44) qui présente une deuxième ouverture de passage (44.1) et une deuxième géométrie de guidage (45).

5. Soupape électromagnétique selon la revendication 4, **caractérisée en ce que** la cage de commande (41) et la bague de commande (44) sont à chaque fois réalisées sous forme de pièce unique ou le module de guidage (40) avec la cage de commande (41) et la bague de commande (44) est réalisé d'une seule pièce.

6. Soupape électromagnétique selon la revendication 4, **caractérisé en ce que** la cage de commande (41) et la bague de commande (44) sont connectées de manière solidaire en rotation l'une avec l'autre, la bague de commande (44) étant introduite dans la cage de commande (41) et au moins un ergot de positionnement (44.2) réalisé au niveau de la bague de commande (44) étant assemblé dans un évidement de positionnement correspondant (41.2) réalisé au niveau de la cage de commande.

7. Soupape électromagnétique selon l'une quelconque des revendications 4 à 6, **caractérisée en ce que** l'induit de soupape (20) présente un corps de base cylindrique étagé (22) avec deux diamètres extérieurs différents, une portion du corps de base (22) de l'induit de soupape (20) guidée dans l'au moins une ouverture de passage (41.1, 44.1) du module de guidage (40) présentant une troisième géométrie de guidage (28) qui, dans le cas d'un déplacement axial de l'induit de soupape (20) dans la direction du noyau polaire (11), coopère avec la première géométrie de guidage (42) de la cage de commande (40), et, dans le cas d'un déplacement axial de l'induit de soupape (20) dans la direction du siège de soupape (15.1), coopère avec la deuxième géométrie de guidage (45) de la bague de commande (44), et génère un mouvement de rotation de l'induit de soupape (20) et/ou du module de guidage (40) autour d'un axe longitudinal commun, l'induit de soupape (20) étant guidé radialement de manière déplaçable en rotation ou avec une protection antirotation au niveau d'une paroi intérieure de la douille de guidage (13) par une portion du corps de base (22) disposée à l'extérieur du module de guidage (40) .

8. Soupape électromagnétique selon l'une quelconque des revendications 4 à 7, **caractérisée en ce que** la première géométrie de guidage (42) présente un premier guide à coulisse périphérique (43) avec des premiers évidements (43.1) réalisés au niveau d'une paroi de la première ouverture de passage (41.1) avec une répartition angulaire uniforme, lesquels évidements sont séparés les uns des autres par des premières nervures de séparation (43.2) au niveau desquelles est à chaque fois réalisé un biseau unilatéral (43.3), la deuxième géométrie de guidage (45) présentant un deuxième guide à coulisse périphérique (46) avec des deuxièmes évidements (46.1, 46.2) réalisés au niveau d'une paroi de la deuxième ouverture de passage (44.1) avec une répartition angulaire uniforme, avec des profondeurs axiales différentes, lesquels évidements sont séparés les uns des autres par des deuxièmes nervures de séparation (46.3) au niveau desquelles est à chaque fois réalisé un biseau unilatéral (46.4), les premières nervures de séparation (43.2) étant disposées de manière décalée par rapport aux deuxièmes nervures de séparation (46.3), et la troisième géométrie de guidage (28) présentant au moins un élément de positionnement saillant radialement (28.1).

9. Soupape électromagnétique selon la revendication 8, **caractérisée en ce que** l'induit de soupape (20), dans le cas d'un déplacement axial provoqué par la force magnétique du module magnétique dans la direction du noyau polaire (11), entraîne le poussoir (30) et son élément de fermeture (34), l'au moins un élément de positionnement (28.1) parvenant à partir d'une position dans un deuxième évidement (46.1, 46.2) sur un biseau correspondant (43.3) de la cage de commande (41) de telle sorte qu'une force périphérique agisse sur le module de guidage (40) et/ou l'induit de soupape (20) et fasse tourner le module de guidage (40) et/ou l'induit de soupape (20) autour d'un axe longitudinal correspondant jusqu'à ce que l'au moins un élément de positionnement (28.1) à l'extrémité du biseau (43.3) glisse dans un premier évidement correspondant (43.1), l'au moins un élément de positionnement (28.1), dans le cas du déplacement axial de l'induit de soupape (20) provoqué par la force de ressort du ressort de rappel (16) dans la direction du siège de soupape (15.1), parvenant hors du premier évidement (43.1) sur un biseau correspondant (46.3) de la bague de commande (44), de telle sorte qu'une force périphérique agisse sur le module de guidage (40) et/ou l'induit de soupape (20) et fasse tourner davantage le module de guidage (40) et/ou l'induit de soupape (20) autour de l'axe longitudinal correspondant jusqu'à ce que l'au moins un élément de positionnement (28.1) à l'extrémité du biseau (46.3) glisse dans un deuxième évidement correspondant (46.1, 46.2).

10. Soupape électromagnétique selon la revendication 9, **caractérisée en ce que** dans la position ouverte non alimentée en courant, l'au moins un élément de positionnement (28.1) s'applique contre une butée dans une deuxième formation plate (46.2) et dans la position fermée non alimentée en courant, est guidé dans une deuxième formation profonde (46.1) jusqu'à la venue en butée de l'élément de fermeture (34) dans le siège de soupape (15.1).

11. Système de freinage hydraulique (1) pour un véhicule, comprenant un cylindre de frein principal (5), une unité hydraulique (9) et plusieurs freins de roues (RR, FL, FR, RL), l'unité hydraulique (9) comprenant au moins deux circuits de freinage (BC1, BC2) pour la modulation de la pression de freinage dans les freins de roues (RR, FL, FR, RL), **caractérisé en ce que** les au moins deux circuits de freinage (BC1, BC2) présentent chacun au moins une soupape électromagnétique bistable (10) qui est réalisée selon au moins l'une des revendications 1 à 10, et qui, dans la position ouverte non alimentée en courant, libère la modulation de pression de freinage dans au moins un frein de roue associé (RR, FL, FR, RL) et, dans la position fermée non alimentée en courant, renferme une pression de freinage actuelle dans l'au moins un frein de roue associé (RR, FL, FR, RL).
